# FASCICULE DE BREVET EUROPEEN

(11) **EP 0 497 666 B1**
(45) Date de publication et mention de la délivrance du brevet: **22.05.1996**
(21) Numéro de dépôt: 92400185.2
(22) Date de dépôt: 24.01.1992
(51) Int. Cl.: G02F 1/025

(54) **Dispositif électro-optique à guide d'onde**
Wellenleiter-elektrooptische Vorrichtung
Waveguide electro-optic device

(30) Priorité: 01.02.1991 FR 9101155
(43) Date de publication de la demande: 05.08.1992
(73) Titulaire: ALCATEL N.V., NL-1077 XX Amsterdam (NL)
(72) Inventeur: Zamkotsian, Frédéric, F-13006 Marseille (FR)
(74) Mandataire: Bourely, Paul

(56) Documents cités:
- ELECTRONICS LETTERS. vol. 26, no. 19, 13 Septembre 1990, STEVENAGE GB pages 1560 - 1561; F. ZAMKOTSIAN ET AL.: 'Electro-optic polarization convertor on (110) InP'
- PATENT ABSTRACTS OF JAPAN vol. 13, no. 370 (P-920)17 Août 1989 & JP-A-01 128 036

## Description

Un dispositif électro-optique comporte généralement des électrodes métalliques pour appliquer un champ ou injecter un courant à travers un guide d'onde optique. L'une d'elles est située à proximité immédiate de ce guide et peut alors affecter la propagation des modes optiques qui y sont guidés. Cela se traduit par une déformation et/ou une atténuation de ces modes et peut donc nuire au fonctionnement de ce dispositif.

On comprendra mieux le problème sans vouloir en restreindre la généralité en considérant le cas d'un modulateur de polarisation qui est décrit dans l'article ELECTRO-OPTIC POLARISATION CONVERTOR ON (110) InP (ELECTRONICS LETTERS 13th September 1990, Vol. 26 No.19 pp.1560-1561.

La fonction d'un tel modulateur est de provoquer un transfert d'énergie par effet électro-optique entre les modes fondamentaux TE et TM d'un guide optique. On utilise pour cela un champ électrique créé dans une jonction de type "pin" à partir d'électrodes constituées par des couches métalliques. La présence d'une telle couche métallique à proximité de ce guide peut alors perturber gravement l'interaction prévue théoriquement entre les modes optiques TE et TM et le champ électrique appliqué, ceci parce que cette couche déforme et/ou atténue, de manière éventuellement différente, les deux modes optiques.

La présente invention a notamment pour but de réaliser de manière simple un dispositif électro-optique semi-conducteur à guide d'onde qui, tout en étant efficace, évite, au moins partiellement, certaines interactions nuisibles. Ces dernières sont celles qui peuvent apparaître entre, d'une part une onde parcourant un guide d'onde formé dans une plaquette, d'autre part le matériau conducteur d'une électrode de localisation qui est formée sur cette plaquette pour localiser dans ce guide un phénomène électrique utile tel qu'un champ ou un courant.

L'abrégé en anglais correspondant à la demande de brevet japonais JP-A-01 128 036 décrit un dispositif opto-électronique réalisé au moyen d'un substrat en niobate de lithium et comportant des guides de lumière obtenus par diffusion thermique de titane dans le substrat.

Des signaux de commande sont appliqués par des films conducteurs d'indice de réfraction inférieur à celui du niobate et pour autoriser un fonctionnement rapide, des films métalliques sont placés sur les films conducteurs sauf sur les régions des guides de lumière. Toutefois, cette réalisation n'utilise pas un matériau semi-conducteur.

Aussi l'invention a pour objet un dispositif électro-optique à guide d'onde comportant :
- une plaquette semi-conductrice présentant une face principale,
- un guide d'onde formé dans cette plaquette pour guider une onde optique avec laquelle une intéraction utile de nature électro-optique doit être réalisée,
- et une électrode de localisation s'étendant selon cette face principale et présentant une surface de localisation en regard de ce guide pour localiser, au moins partiellement, un phénomène électrique dans ce guide, cette électrode de localisation étant constituée d'une couche de localisation semi-conductrice dont la résistance électrique est abaissée par un dopage et d'une couche métallique, en contact avec ladite couche de localisation semi-conductrice, ce dispositif étant caractérisé par le fait que ladite électrode de localisation comporte deux plages juxtaposées dans ladite face principale de la plaquette, ces deux plages étant
- une plage de connexion comportant ladite couche métallique, un intervalle de séparation étant laissé sur cette face principale entre cette plage et ledit guide d'onde, cet intervalle étant dimensionné de façon à éviter, au moins partiellement, une interaction nuisible entre cette couche métallique et ladite onde optique,
- et une plage de localisation pénétrant dans ledit intervalle de séparation et comportant ladite surface de localisation, cette plage étant constituée de ladite couche de localisation semi-conductrice.

A l'aide des figures schématiques ci-jointes, on va décrire ci-après comment la présente invention peut être mise en oeuvre, étant entendu que les éléments et dispositions mentionnés et représentés ne le sont qu'à titre d'exemples non limitatifs. Lorsqu'un même élément est représenté sur plusieurs figures il y est désigné par le même signe de référence.

La figure 1 représente une vue en coupe transversale d'un modulateur de polarisation connu.

Les figures 2 et 3 représentent des graphes de variation de l'absorption d'une onde optique en fonction de l'épaisseur d'une couche semiconductrice surmontant un guide parcouru par cette onde et inclus dans le modulateur de la figure 1, ceci en présence et en l'absence d'une couche métallique surmontant cette couche semiconductrice, respectivement.

Les figures 4 et 5 représentent des vues d'un modulateur de polarisation constituant un dispositif selon la présente invention, ce modulateur étant vu en coupe transversale et de dessus, respectivement.

La Figure 6 représente une vue de dessus d'une variante du modulateur des figures 4 et 5, la figure 4 constituant une vue de cette variante en coupe transversale selon une ligne IV-IV de la Figure 6.

La Figure 7 représente une vue en coupe transversale d'un dispositif électro-optique à électrodes latérales connu.

La Figure 8 représente une vue en coupe transversale d'un dispositif électro-optique à électrodes latérales selon la présente invention.

La Figure 9 représente une vue en coupe transversale d'un laser semiconducteur connu.

La Figure 10 représente une vue en coupe transversale d'un laser semiconducteur constituant un dispositif électro-optique selon la présente invention.

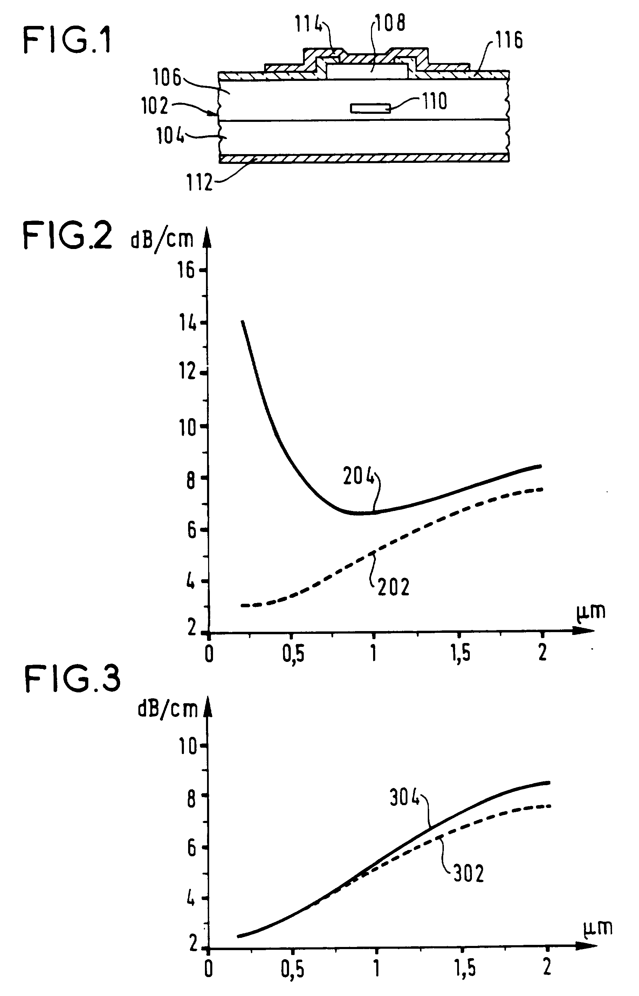

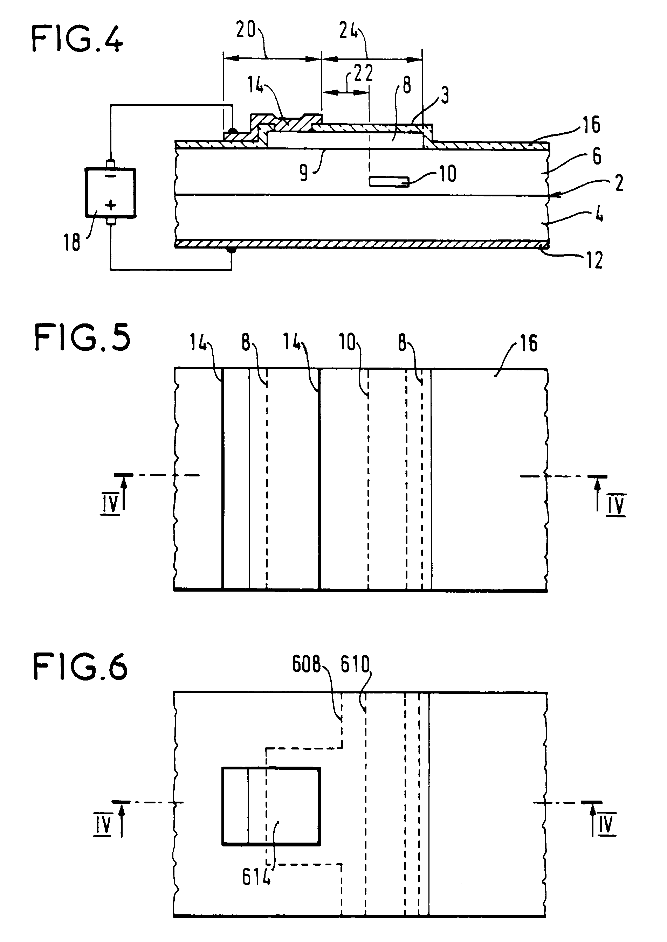

On va tout d'abord décrire, de manière générale, en se référant aux figures 4 et 5, les dispositions communes à un dispositif connu tel que celui de la Figure 1 et à un dispositif selon la présente invention. Selon ces dispositions communes le dispositif comporte :
- une plaquette 2 présentant une face principale 3,
- un guide d'onde 10 proche de cette face principale pour guider une onde optique avec laquelle une intéraction utile de nature électro-optique doit être réalisée,
- et une électrode de localisation 14, 8 s'étendant selon cette face principale et présentant une surface de localisation 9 en regard de ce guide pour localiser, au moins partiellement, un phénomène électrique dans ce guide. Ce phénomène apparait lorsque cette électrode et une électrode de base 12 sont connectées à une source d'alimentation électrique convenable 18, et il réalise alors ladite interaction utile avec cette onde. Cette électrode de localisation comporte une couche bonne conductrice électrique 14 pour limiter la résistance électrique de la connexion entre cette surface de localisation et cette source d'alimentation.

Toujours de manière générale on peut adopter, selon la présente invention, les dispositions avantageuses suivantes :

L'électrode de localisation comporte deux plages qui sont juxtaposées dans la face principale 3 de la plaquette 2 et qui sont les suivantes :
- Une plage de connexion 20 comporte ladite couche bonne conductrice 14. Un intervalle de séparation 22 est laissé sur la face principale entre cette plage et le guide d'onde 10. Il présente une largeur suffisante pour éviter, au moins partiellement, une interaction nuisible entre cette couche bonne conductrice et ladite onde optique.
- Une plage de localisation 24 pénétre dans l'intervalle de séparation 22 et comporte la surface de localisation 9. Elle est constituée d'une couche de localisation 8 qui est électriquement moins conductrice que la couche bonne conductrice, ceci parce qu'un coefficient de résistance électrique de cette couche de localisation est choisi suffisamment grand pour éviter, au moins partiellement une interaction nuisible entre cette couche de localisation et ladite onde optique.

La plaquette 2 est typiquement constituée d'un matériau semiconducteur et le guide d'onde est intégré à cette plaquette. La couche de localisation 8 est alors intégrée aussi à cette plaquette et est constituée d'un matériau semiconducteur présentant un dopage relativement fort par rapport à cette plaquette, la couche bonne conductrice 14 étant déposée sur la face principale 3 et étant constituée d'un matériau métallique.

On va maintenant décrire de manière plus particulière les dispositifs représentés sur les figures.

Le modulateur de polarisation connu de la Figure 1 est décrit dans l'article précité. Il comporte une plaquette semiconductrice 102 comportant :
- une couche de base 104 de type "n",
- une couche intermédiaire 106 de type "i",
- et une couche de contact 108 de type "p" à fort dopage, et d'étendue limitée.

Dans la couche 106 est formé un guide d'onde 110.

Un champ électrique vertical est appliqué à ce guide entre une électrode de base 112 et une électrode de localisation constituée partiellement par une couche métallique 114 présentant un contact sur la couche 108 et séparée par ailleurs de la plaquette par une couche isolante 116. L'action de localisation de champ électrique de la couche 114 est complétée par la couche de contact 108.

Pour des ondes parcourant ce guide, la couche métallique 114 constitue une couche perturbatrice.

La figure 2 représente la variation des absorptions optiques (en dB/cm) pour les modes TE et TM en fonction de l'épaisseur de la couche 108 (en micromètres). Cette épaisseur constitue la partie variable de la distance de la couche perturbatrice au guide optique d'onde.

Dans la partie gauche du graphe, on observe de fortes variations d'atténuation des modes guidés. Ces variations sont dues à l'effet de la couche 114. Elles sont notablement dissemblables pour les modes TE (ligne 202) et TM (ligne 204). Sur la figure 3 relative à la même structure que dans le cas de la figure 2 mais sans la couche 114, on observe au contraire une variation comparable des absorptions des modes TE (ligne 302) et TM (ligne 304) en fonction de l'épaisseur de la couche 108. Ces absorptions sont, en outre, bien inférieures à celles représentées figure 2 pour de faibles épaisseurs de la couche 108.

Le dispositif des figures 4 et 5 est analogue au précédent, les numéros de référence des éléments correspondants étant diminués de 100. Il comporte, de bas en haut, l'électrode de base 12, une couche de base 4 de type "n", une couche intermédiaire 6 de type "i", incluant le guide d'onde 10, un couche de contact 8 à fort dopage "p", une couche métallique 14 constituant ladite couche bonne conductrice, et une couche d'isolation 16.

La présente invention a pour effet d'éliminer les perturbations induites par la couche métallique en l'éloignant latéralement du guide optique et en la remplaçant en lieu et place par la couche semiconductrice 8. Le fort dopage de celle-ci'permet d'assurer une conduction électrique suffisante pour l'application du champ dans la zone du guide optique 10. L'épaisseur et le dopage de cette couche 8 sont choisis de manière à réaliser un compromis entre son absorption optique et sa résistance électrique. Cette nouvelle structure d'électrode peut être dite du type à Métallisation Absorbante Déportée et sera désignée par la suite par ses initiales M.A.D.

Les figures 5 et 6 représentent deux structures longitudinales de ce type. Lorsque deux éléments se correspondent sur ces deux figures, le numéro de référence de celui de la Figure 6 est augmenté de 600. Sur la figure 5 la couche métallique 14 court le long du guide optique 10, ceci dans le cas où le matériau de la couche 8 dopé p n'est pas d'une conductivité suffisante pour assurer la distribution longitudinale du potentiel sans chute de potentiel gênante. Sur la figure 6, la couche métallique 614 est limitée, ceci dans le cas où le matériau de la couhe 608 est suffisamment dopé pour assurer la distribution longitudinale d'un potentiel constant. Cette dernière disposition a pour intérêt de diminuer la capacité électrique du dispositif.

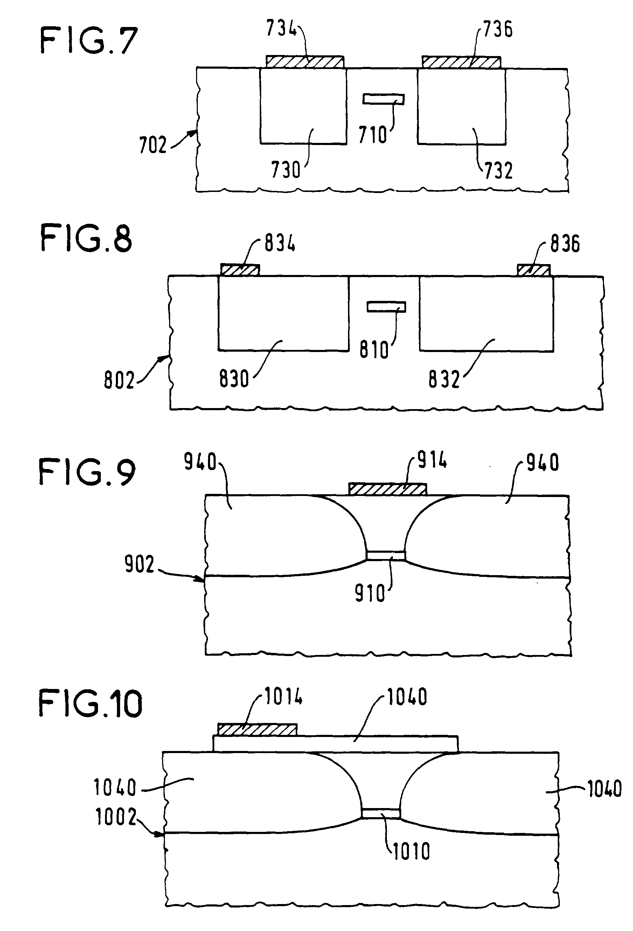

L'invention illustrée sur l'exemple d'un modulateur de polarisation peut s'appliquer à d'autres dispositifs où le champ électrique est appliqué verticalement dans une structure par exemple de type "pin". Elle peut aussi être utilisée dans des dispositifs où le champ est appliqué horizontalement par des électrodes latéales. Les figures 7 et 8 représentent deux tels dispositifs qui sont mutuellement analogues et dans lesquels deux éléments correspondants portent le même numéro de référence sauf en ce qui concerne le chiffre des centaines qui est 7 sur la figure 7 et 8 sur la figure 8.

Une plaquette semiconductrice 702 ou 802 comporte un guide d'onde 710 ou 810 entre deux bandes latérales semiconductrices 730 et 732 ou 830 et 832 constituées d'une couche de localisation semiconductrice à fort dopage.

Ces bandes sont surmontées de bandes bonnes conductrices 734 et 736 ou 834 et 836 constituées d'une couche métallique bonne conductrice pour former deux électrodes latérales telles que 730, 734 ou 830, 834 qui constituent des électrodes de localisation de part et d'autre du guide 710 ou 810. Conformément à l'invention et à la figure 8, les bandes bonnes conductrices 834 et 836 ont été notablement éloignées du guide 810, et le dopage des bandes semiconductrices a été choisi pour donner une résistance électrique totale suffisamment petite à chacune des électrodes latérales telles que 830, 834.

Dans les lasers des figures 9 et 10 le phénomène électrique réalisé est l'injection d'un courant électrique vertical.

Ces deux lasers sont mutuellement analogues. Leurs éléments correspondants portent les mêmes numéros de référence sauf que le nombre des centaines est 9 pour la Figure 9 et 10 pour la Figure 10.

Un guide d'onde 910 ou 1010 est formé dans un une plaquette semiconductrice 902 ou 1002 entre deux bandes de confinement électriques telles que 940 ou 1040. Il reçoit un courant vertical à partir d'une couche métallique 914 ou 1014.

Conformément à la présente invention et à la figure 10, la couche métallique 1014 a été décalée latéralement par rapport au guide 1010 et l'électrode de localisation partiellement constituée par cette couche a été complétée par une couche de localisation semiconductrice à fort dopage 1040.

Il apparaît de ce qui précède que la structure d'électrode M.A.D. peut s'appliquer à toutes structures en matériaux semiconducteurs nécessitant l'établissement d'un champ (dispositif dit "en inverse" tels les modulateurs de phase, de polarisation ou les coupleurs...) ou l'injection d'un courant (dispositif dit "en direct" tels les lasers, les amplificateurs optiques). Elle s'applique identiquement pour une structure "pin" et une structure "nip".

## Revendications

1. Dispositif électro-optique à guide d'onde comportant :
- une plaquette semi-conductrice (2) présentant une face principale (3),
- un guide d'onde (10) formé dans cette plaquette pour guider une onde optique avec laquelle une intéraction utile de nature électro-optique doit être réalisée,
- et une électrode de localisation (14, 8) s'étendant selon cette face principale et présentant une surface de localisation (9) en regard de ce guide pour localiser, au moins partiellement, un phénomène électrique dans ce guide, cette électrode de localisation étant constituée d'une couche de localisation (8) semi-conductrice dont la résistance électrique est abaissée par un dopage et d'une couche métallique (14) en contact avec ladite couche de localisation semi-conductrice, ce dispositif étant caractérisé par le fait que ladite électrode de localisation (14, 8) comporte deux plages juxtaposées dans ladite face principale (3) de la plaquette, ces deux plages étant
- une plage de connexion (20) comportant ladite couche métallique (14), un intervalle de séparation (22) étant laissé sur cette face principale entre cette plage (20) et ledit guide d'onde (10), cet intervalle (22) étant dimensionné de façon à éviter, au moins partiellement, une interaction nuisible entre cette couche métallique et ladite onde optique,
- et une plage de localisation (24) pénétrant dans ledit intervalle de séparation (22) et comportant ladite surface de localisation (9), cette plage (24) étant constituée de ladite couche de localisation (8) semi-conductrice.

2. Dispositif selon la revendication 1, ledit phénomène électrique étant un champ électrique.

3. Dispositif selon la revendication 1, ledit phénomène électrique étant un courant électrique.

4. Dispositif selon la revendication 1, ce dispositif étant un modulateur de polarisation.

5. Dispositif selon la revendication 1, ce dispositif étant un coupleur optique.

6. Dispositif selon la revendication 1, ce dispositif étant un dispositif à électrodes latérales.

7. Dispositif selon la revendication 1, ce dispositif étant un laser.

## Patentansprüche

1. Elektro-optische Lichtleiter-Vorrichtung, die aufweist:
- eine Halbleiterplatte (2) mit einer Hauptseite (3),
- einen in dieser Platte ausgebildeten Lichtleiter (10), um eine Lichtwelle zu führen, mit der eine nützliche Wechselwirkung elektro-optischer Art hergestellt werden soll,
- und eine Lokalisationselektrode (14, 8), die sich gemäß dieser Hauptseite erstreckt und die eine Lokalisationsfläche (9) gegenüber diesem Leiter aufweist, um zumindest teilweise ein elektrisches Phänomen in diesem Leiter zu lokalisieren, wobei diese Lokalisationselektrode aus einer halbleitenden Lokalisationsschicht (8), deren elektrischer Widerstand durch eine Dotierung vermindert ist, und einer Metallschicht (14) besteht, die mit der halbleitenden Lokalisationsschicht in Verbindung steht,
dadurch gekennzeichnet, daß die Lokalisationselektrode (14, 8) zwei aneinander angrenzende Bereiche in der Hauptseite (3) der Platte aufweist und daß diese beiden Bereiche
- ein Verbindungsbereich (20), der die Metallschicht (14) enthält, wobei auf dieser Hauptseite zwischen diesem Bereich (20) und dem Lichtleiter (10) ein Trennabstand (22) verbleibt, der so bemessen ist, daß er zumindest teilweise eine störende Wechselwirkung zwischen dieser Metallschicht und der Lichtwelle verhindert,
- und ein Lokalisationsbereich (24) sind, der in den Trennabstand (22) eindringt und die Lokalisationsfläche (9) aufweist, wobei dieser Bereich (24) aus der halbleitenden Lokalisationsschicht (8) besteht.

2. Vorrichtung nach Anspruch 1, bei der das elektrische Phänomen ein elektrisches Feld ist.

3. Vorrichtung nach Anspruch 1, bei der das elektrische Phänomen ein elektrischer Strom ist.

4. Vorrichtung nach Anspruch 1, wobei diese Vorrichtung ein Polarisationsmodulator ist.

5. Vorrichtung nach Anspruch 1, die ein Lichtkoppler ist.

6. Vorrichtung nach Anspruch 1, die eine Vorrichtung mit seitlichen Elektroden ist.

7. Vorrichtung nach Anspruch 1, die ein Laser ist.

## Claims

1. Waveguide electro-optic device including:
- a semiconductor plate (2) having a principal side (3),
- a waveguide (10) formed in said plate for guiding an optical wave with which a useful interaction of an electro-optical nature is required to be performed,
- and a locating electrode (14, 8) extending along said principal side and having a locating surface (9) facing said guide in order to localize, at least partially, an electrical phenomenon in said guide, said locating electrode comprising a semiconductor locating layer (8) the electrical resistance of which is reduced by doping and a metal layer (14) in contact with said semiconductor locating layer, said device being characterized in that said locating electrode (14, 8) includes two juxtaposed defined areas in said principal side (3) of said plate, these two defined areas being:
- a connection defined area (20) including said good conducting layer (14), a separating gap (22) being left on said principal side between said defined area (20) and said waveguide (10), said gap (22) having a sufficient width to avoid, at least partially, a harmful interaction between said good conducting layer and said optical wave,
- and a locating defined area (24) penetrating into said separation gap (22) and including said locating surface (9), said defined area (24) consisting of said semiconductor locating layer (8).

2. Device according to claim 1, in which said electrical phenomenon is an electrical field.

3. Device according to claim 1, in which said electrical phenomenon is an electric current.

4. Device according to claim 1, in which said device is a polarization converter.

5. Device according to claim 1, in which said device is an optical coupler.

6. Device according to claim 1, in which said device is a lateral electrode device.

7. Device according to claim 1, in which said device is a laser.
